(19) **Europäisches Patentamt**
**European Patent Office**
**Office européen des brevets**

(11) **EP 2 604 992 A2**

(12) **EUROPEAN PATENT APPLICATION**

(43) Date of publication:
**19.06.2013 Bulletin 2013/25**

(51) Int Cl.:
***G01M 11/00*** (2006.01)

(21) Application number: **12192700.8**

(22) Date of filing: **15.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.12.2011 NL 2007976**

(71) Applicant: **Draka Comteq B.V.**
**1083 HJ Amsterdam (NL)**

(72) Inventor: **Achten, Franciscus Johannes**
**5032 EM Tilburg (NL)**

(74) Representative: **Algemeen Octrooi- en Merkenbureau**
**P.O. Box 645**
**5600 AP Eindhoven (NL)**

(54) **A method for the characterization of optical properties of an optical fiber**

(57) The present invention relates to a method for the determination of one or more optical properties of an optical fiber. More in detail, the present invention provides a solution for the qualification of multimode fibers without performing experimental tests on different measurement setups. According to the present method extensive manual (operator) handling of the fiber being tested is minimized.

**Fig. 1**

## Description

The present invention relates to a method for the determination of optical properties of an optical fiber. Furthermore, the present invention relates to the use of a specific method for the determination of one or more optical properties of an optical fiber. Additionally, the present invention relates to a method for selecting optical fibers for a specific configuration, especially the selection of Multi Mode optical fibers (MMF) to be applied in so called ribbon cables, or configurations where MMF are required that are less sensitive to attenuation increase caused by bends in the fibers.

The scientific article titled "Experimental Investigation of Variation of Backscattered Power Level with Numerical Aperture in Multimode Optical Fibers", Electronics Letters, Vol. 18, pp. 130-132, 1982, discloses experiments for the determination how the backscattered power level varies with numerical aperture (NA). This article teaches that graded-index fibers are more sensitive to such variations than step-index fibers. The experiments disclosed therein were performed by splicing together fibers of different NA's and measuring the corresponding change in backscattering level and generating two curves: a loss curve and a parameter fluctuation curve. The results obtained showed that numerical apertures variations are accompanied by Rayleigh scattering variations.

JP2008203184 relates to a method, an apparatus and a program for evaluating a characteristic of an optical fiber obtained by a bidirectional OTDR measurement from both ends of the transmission path.

JP3120437 relates to a method for measuring strain from an optical waveguide in which reference optical fiber and a test optical fiber are connected to each other and an OTDR measuring instrument is connected to the side of the fiber. The strain of the fiber is found by specific arithmetic from the shift and the measured Brillouin frequency shift of the fiber (t).

JP11287741 relates to a method for measuring the maximum theoretical numerical aperture of an optical fiber.

Optical fibre ribbons are used for data communication applications in which a high data speed is used. The effective high data speed is obtained by parallel transmission on a plurality of glass fibres, using a correspondingly lower speed. However, in such a situation a delay time occurs for each optical fibre, which may lead to differences in the signal arrival times between respective fibre channels. This leads to a spreading between the light pulses on the various optical glass fibres, which phenomenon is referred to as "skew" in practice. Skew is the maximum difference in signal propagation time between the channels in the optical fibre ribbon. Skew is an important factor in determining the maximum speed of synchronous parallel data transmission.

The ribbon skew is expressed in ps/m being the maximum delay time difference per unit of length between the various fibers from the ribbon.

In most applications a provision for compensation of the ribbon skew is made in the receiver electronic circuit called "de-skewing". However, the range of de-skewing can be limited and this circuitry leads to additional cost also. For this reason, reducing the skew in the ribbon itself can offer considerable cost savings. Low skew ribbons with skew performances in the range of <10 ps/m to < 1 ps/m are commercially available.

There are basically three main reasons for skew in ribbons i.e.:

A. Differences in delay time per fiber
B. Differences in delay time due to differences in wavelength of the optical systems used in the various fibers of the ribbons and
C. Differences in delay time per fiber due to the ribbon making process.

Without considering the effect of the ribbon making process, the present inventors assume that the NA value tolerance seems to be the biggest cause of delay time differences in MMF (Multi Mode Optical Fiber). Maximum value for Ge-doped MMF is in the order of 15 ps/m. A second order impact on delay time differences is in the wavelength variation of the optical signal source which has a maximum value in the order of 2 ps/m if the total 840 to 860 nm wavelength range is applied. DMD (differential mode delay) is a third cause of delay time differences which can be as high as several ps/m for very low bandwidth MMF but can be optimized down to 0.1 or 0.3 ps/m by applying high grade bandwidth MMF. Reversely stated, a maximum delay time difference of 1 ps/m directly leads to a minimum requirement of the so called effective NA ($NA_{eff}$) change of less then 1%, i.e. $2*10^{-3}$ in absolute value. Assuming a normal distribution of NA-values and choosing the "+/- 2σ" value as a practical measure for the extreme values, this involves a maximum statistical variance of about $2/4* 10^{-3}= 0.5*10^{-3}$.

The main causes for the deviation are supposed to be measuring inaccuracy and process tolerances. The $NA_{eff}$ value is measured applying the so-called Far Field Scanning method in which a scan is made of the far field of a 2 m fiber sample illuminated by an 850 nm LED with the appropriate launching conditions. The main process influences that cause the intrinsic variation in $NA_{eff}$ are in i) the Ge dope concentration variation at the core centre line and ii) the drawing induces variations in $NA_{eff}$ value, that are assumed to be small.

The NA values of a set of MMF used in an optical fiber ribbon is thus an indicator for the skew of such optical fiber ribbon. The NA values of a large batch of MMF can thus be used to select MMF for an optical fiber ribbon with low skew.

Additionally the NA value of an MMF is also an indicator of the macrobend sensitivity of an MMF. Macrobend sensitivity is defined as the induced attenuation, or loss in dB when a fiber is bended to a certain bend radius over a certain number of turns. MMF with low macrobend sensitivity are preferably used in situations where the MMF is bend in low radii, or where the MMF is exhibiting external stresses such as in an optical fiber ribbon.

For determining the optical fiber properties delay time, also called 'time of flight', that can be used to determine skew for a group of fibers and Macrobend induced attenuation, specific measurement equipment is required with the need for extensive operator handling. Also the measurement of NA, or $NA_{eff}$ requires specific measurement equipment and extensive operator handling.

An object of the present invention is to provide a reliable and reproducible method for the determination of one or more optical properties of an optical fiber.

Another object of the present invention is to provide a method for the determination of one or more optical properties of an optical fiber in which method extensive manual operator handling is prevented.

Another object of the present invention is to provide a method for the determination of one or more optical properties of an optical fiber in which method the number of measurement equipments is minimized.

Another object of the present invention is to provide an accurate NA measurement for the purpose of fiber selection on NA value.

Another object of the present invention is to provide a method allowing for selection of MMF from stock to be applied in special ribbon cables with low skew requirements without the need to use expensive dedicated equipment.

The present inventors thus found a method for the determination of one or more optical properties of an optical fiber, said method comprises according to the present invention the flowing steps:

> i) providing multiple optical fibers with expected variations in values for an optical property,
> ii) measuring a value for the optical property of said fibers,
> iii) select one of said fibers as a reference fiber,
> iv) determining the relative backscatter coefficient (Rrel) of said optical fibers to the reference fiber,
> v) correlating the data obtained in step ii) with the data obtained instep iv) for obtaining a calibration curve disclosing the correlation between Rrel and the values for the optical property of said optical fibers,
> vi) measuring the Rrel of another optical fiber to the reference fiber, and
> vii) determining a value for the optical property of said another optical fiber on basis of the calibration curve obtained in step v)

In the aforementioned method steps v) and vi) can be repeated for determining a value of the optical property for a larger batch of optical fibers.

The aforementioned method has resulted in a method which is reproducible and low costs, compared to the current measurement methods. In addition, the number of measurement setups is drastically reduced, compared to the standard method for measuring these optical properties.

In the present method it is preferred to use the OTDR measurement for determining one or more fiber optical properties. The present method relates thus to the determination of $R_{rel}$, (Relative Backscatter Coefficient) from an OTDR backscatter trace, and to use this $R_{rel}$ together with a calibration curve to assign fiber properties to a fiber under test. These properties are NA (Numerical Aperture), delay time, and Macrobend induced attenuation. Up till now determination of these parameters requires specific measurement setups (being not OTDR) with extensive operator handling.

According to an embodiment of the present method the optical property is preferably chosen from the group of NA, delay time, Macrobend induced attenuation, or combinations thereof.

In a first exemplary an embodiment of the present invention the determination of the optical property Macrobend induced attenuation according to step ii) is carried out by applying bends having a specific bend radius in an optical fiber and subsequently measuring the Macrobend induced attenuation of the light signal.

In a second exemplary embodiment of the present invention the determination of the optical property delay time according step ii) is carried out by a Time Of Flight (TOF) measurement of a laser pulse travelling through the fiber with exact known length. TOF measurement is done by using a digital signal analyzer with calibrated delay-line.

In a third exemplary embodiment of the present invention the determination of the optical property NA according step ii) is carried out by a Far Field Scanning method.

According to a further embodiment of the present method the optical property is NA and the delay time and/or Macrobend induced attenuation are calculated using mathematical formulas based on the value determined for NA.

The present method may also be used to determine the fiber skew of a group of MMF by using the delay times for said group of MMF, obtained by the present method.

The basis of this method is that the backscattered power $P_b(z)$ 0) can be described as

$$P_b(z) = d(z)P(z)$$

Combining with (formulas from: P.Matthijsse and C.M de Blok; "Field measurement of splice loss applying the backscattering method"; Electronics Letters, Vol 15, No 24, pp 795-6; (1979))

$$d(z) \cong \frac{3}{4}\gamma_s \Delta \frac{\alpha}{\alpha+1}\langle v_g \rangle \Delta t$$

shows that the backscattered power is linearly proportional to the core contrast ($\Delta$), which is the difference in refractive index between the center of the core and the cladding. It is also known that $\Delta$ is proportional with $NA^2$. As the influence of the core diameter is implicitly present in the other coefficients only and is rather low, NA value differences between fibers will dominate the absolute level of the backscattered power. The NA dominance over other parameters is enhanced further by modifying the applied OTDR method slightly in the sense that single mode fiber (SMF) launching is used. In this way, the initiating power is restricted to the lower order modes in the MMF propagating near to the core centre, i.e. in the region with the highest Ge-dope concentration which determines the theoretical NA-value (NAtheor), which can be calculated from the refractive indexes in the core center and the cladding. NAtheor is linear related to the measured NAeff value of the fiber depending on the manufacturing process of the fiber. A typical relation is NAeff = 0.95*NAtheor.

The test method itself is equivalent to measuring the splice or coupling loss between two fibers applying the bi-directional OTDR method, i.e. measuring the discontinuity at a splice or coupling point from two directions. However, whereas for splice or coupling loss measurements the measured discontinuity values are averaged, in this case the difference is determined as a measure for the difference in backscattering coefficient, i.e.

$$R_{REF} - R_{FUT} = (\vec{\alpha} - \bar{\alpha})/2$$

In which $\alpha$ is the direction dependent splice or coupling loss and $R_{REF}$ and $R_{FUT}$ represent the backscattering coefficients of the reference MMF (REF) and the MMF under test (FUT), respectively. The backscattering coefficient is expressed in dB.

The repeatability of the test method is determined by re-measuring a fibre-to-fibre splicing or coupling 10 times. After each measurement the full procedure of cleaving, optimization, splicing and measurement of the discontinuities from two sides is repeated. For measuring the discontinuity on the applied OTDR set-up, a 100 m marker distance was used and the measured loss was compensated for the fiber loss over this marker distance (fixed value of 0.051 dB;). All measurements were done at 1300 nm.

The present inventors found that a significant improvement can be achieved by applying the standard algorithm of fitting both backscatter curves with a linear curve, extrapolating these curves to the splicing or coupling position and determining the discontinuity value from the cross section.

In addition, an even further improvement on the variance can be obtained by averaging the result of multiple measurements.

The present invention is thus related to a method of determining the backscattering coefficient from bidirectional measurement of the splice or coupling loss between a reference MMF (REF) and the MMF under test (FUT). According to a preferred embodiment steps iv) and vi) are carried out by using an optical time domain reflectometer (OTDR) based method.

The present invention relates furthermore to the use of an optical time domain reflectometer (OTDR) based method for determining the Macrobend induced attenuation and/or time delay by measuring the relative backscatter coefficient (Rrel) of said optical fiber.

In addition the present invention relates to the use of an optical time domain reflectometer (OTDR) based method for determining the NA by measuring the relative backscatter coefficient (Rrel) of said optical fiber.

The present invention relates thus to a method for determining the NA by measuring the relative backscatter coefficient (Rrel) of an optical fiber by using the afore mentioned discussed optical time domain reflectometer (OTDR) based method.

The present invention relates thus to a method for determining the Macrobend induced attenuation by measuring the relative backscatter coefficient (Rrel) of an optical fiber by using the afore mentioned discussed optical time domain reflectometer (OTDR) based method.

The present invention relates thus to a method for determining the time delay by measuring the relative backscatter coefficient (Rrel) of an optical fiber by using the afore mentioned discussed optical time domain reflectometer (OTDR) based method.

The present invention relates thus to a method for determining the skew by measuring the relative backscatter coefficient (Rrel) of a group of optical fibers by using the afore mentioned discussed optical time domain reflectometer (OTDR) based method.

Experiments carried out by the present inventors showed a linear correlation between the actual value of the fiber $NA_{eff}$ and the measured relative backscatter coefficient (Rrel) in dB. The repeatability of the OTDR based method according to the present invention is better in comparison with the standard $NA_{eff}$ test method. On basis of the present method it is now possible to select for the purpose of low skew ribbon a group of MMF spools with a maximum delay time difference in the order of 1 ps/m without the need to measure the absolute value of the delay time.

On basis of the present method it is now also possible to select MMF spools with a minimal Macrobend induced loss without the need to measure the Macrobend induced attenuation by existing methods that require specific equipment and extensive operator handlings. The existing method requires specific launch of light into the FUT, while the FUT is bended in a defined way to measure the loss of the launched light in the bended fiber.

The present invention will be explained more in detail by the Examples but the Examples discussed here are for illustrative purposes only.

Figure 1 shows a bi-directional OTDR test set-up for determining the relative backscatter coefficient Rrel of the MMF under test.

Figure 2 shows the measured relation between $NA_{eff}$ (measured with existing NA measurement technique) and $R_{rel}$, the Relative Backscatter Coefficient measured with the method according to the present invention.

Figure 3 shows the relation between $R_{rel}$ and Macrobend induced attenuation.

Example 1

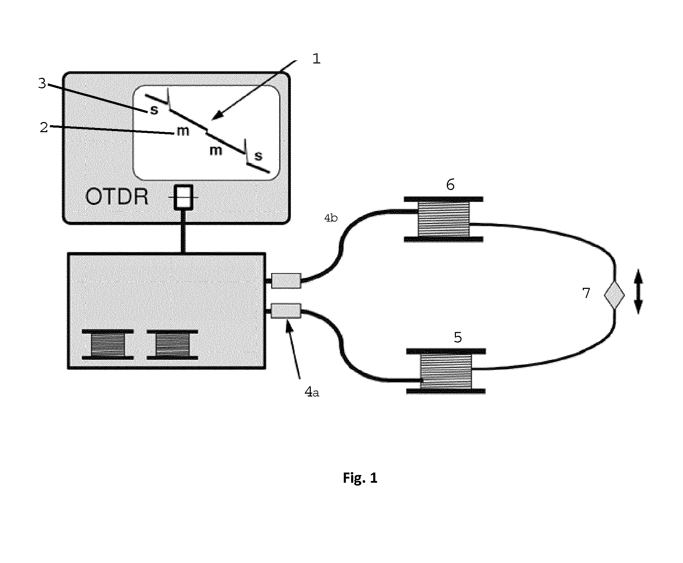

Figure 1 shows a bi-directional OTDR test set-up for determining the relative backscatter coefficient Rrel of the MMF under test. The reference Multimode Fiber (REF) on a spool, indicated with reference number 6 and the various Fiber-under-tests (FUTs) on a spool, indicated with reference number 5, originate from a number of test fibers (750 m length). The OTDR trace (3) of the used launching Single Mode Fiber (SMF) and the MMF under test (2) shows a rather high coupling loss between these fibers, i.e. in the order of 2 dB, which did not deteriorate the dynamic range of the test method noticeably, however. For measuring the discontinuity on the applied OTDR set-up a 100 m marker distance was used and the measured loss was compensated for the fiber loss over this marker distance (fixed value of 0.051 dB). All measurements were done at 1310 nm. As no x-y-z micro-positioner was available with sufficient stability, the REF fiber (6) and FUTs fibers (5) were coupled by making a splice (7). The launching SMF's were coupled to the MMF's by a mechanical coupler (4a, 4b). Average splice loss (1) between the FUT and REF was 0.023 dB over more than 50 splices. The average of the difference in backscatter coefficients between the two spliced fibers was 0.016 dB for the chosen fiber samples whereas the variance was 0.009 dB.

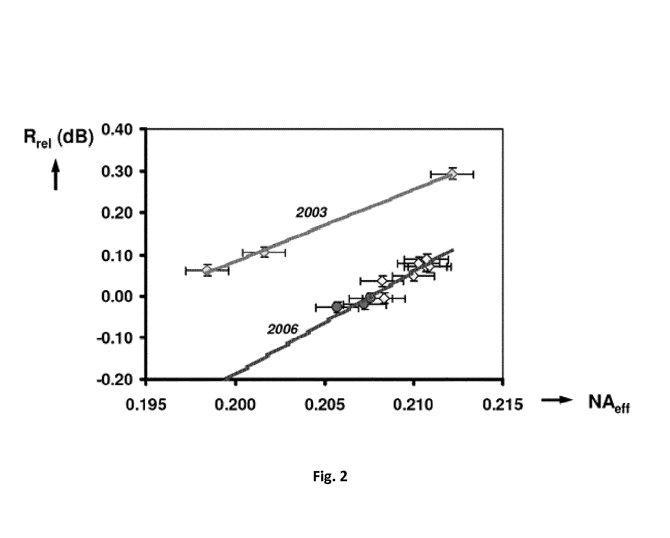

Figure 2 shows the measured relation between $NA_{eff}$ (measured with existing NA measurement technique) and $R_{rel}$, the Relative Backscatter Coefficient measured with the method according to the present invention. Figure 2 shows two lines representing different fiber designs (2003 and 2006). The fitted line over the 2006 FUTs shows a linear relation between both parameters, i.e. the $Na_{eff}$ on the horizontal axis and the $R_{rel}$ on the vertical axis. The fitted line is the calibration curve. The error bars show the wider spread over the $NA_{eff}$ values compared to the $R_{rel}$ values. This justifies the use of the present method by measuring $R_{rel}$ by using OTDR and subsequently computing $NA_{eff}$ from the calibration curve. The position of the fitted line depends on both the design of the Reference fiber and the FUTs. This means the preference of using the same Reference fiber, and, in case the design of the FUT has changed, the calibration curve must be reconstructed, i.e. the relation between $R_{rel}$, and $Na_{eff}$ must be re-measured.

The result of the present method is that once the relation between $R_{rel}$, and $NA_{eff}$ is known, it is possible to measure $R_{rel}$, and use this parameter to assign $NA_{eff}$ to the fiber under test.

Example 2

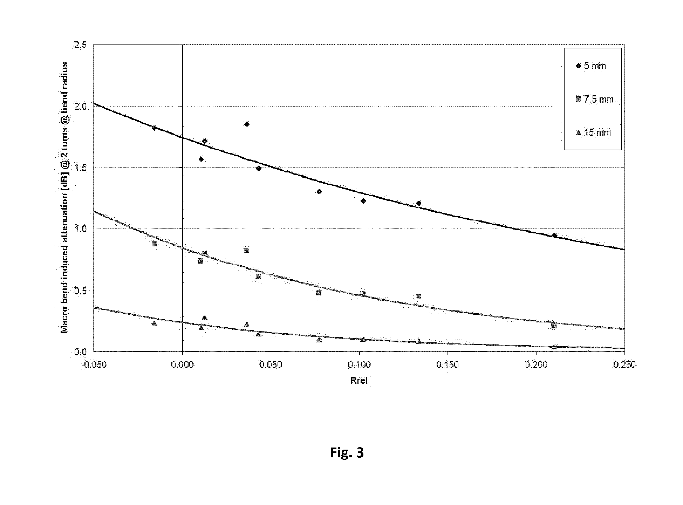

A number of nine multimode Fibers (MMF) are bended by applying two turns over three different bend radii (5, 7.5 and 15 mm). The Macrobend induced attenuation [dB] is measured by an existing macrobend measurement technique. This standard technique involves severe operator handling as the fiber must be carefully bended, and the launched light must fulfill precise launching conditions. In a subsequent step these fibers are measured on $R_{rel}$ with the present method, in which the OTDR method is preferably used, as described above. The results have been disclosed in Figure 3.

Figure 3 clearly shows an increasing Macrobend induced attenuation when the $R_{rel}$ value decreases. On basis of this the present inventors found that the $R_{rel}$ value serves as an indicator for determining the Macrobend induced attenuation of an optical fiber.

The above discussed Examples 1-2 clearly show that the present optical time domain reflectometer (OTDR) based method can be used for i) determining the $NA_{eff}$ of an optical fiber and ii) determining the Macrobend induced attenuation, both by measuring the relative backscatter coefficient (Rrel).

**Claims**

1.  A method for the determination of one or more optical properties of an optical fiber, **characterized in that** said method comprises the flowing steps:

    i) providing multiple optical fibers with expected variations in values for an optical property,
    ii) measuring a value for the optical property of said fibers,
    iii) select one of said fibers as a reference fiber,
    iv) determining the relative backscatter coefficient (Rrel) of said optical fibers to the reference fiber,
    v) correlating the data obtained in step ii) with the data obtained instep iv) for obtaining a calibration curve disclosing the correlation between Rrel and the values for the optical property of said optical fibers,
    vi) measuring the Rrel of another optical fiber to the reference fiber, and
    vii) determining a value for the optical property of said another optical fiber on basis of the calibration curve obtained in step v)

2.  A method according claim 1, **characterized in that** steps vi) and vii) are repeated for multiple fibers.

3.  A method according claims 1 or 2, **characterized in that** the optical properties are chosen from the group of NA (numerical aperture), delay time, Macrobend induced attenuation, or combinations thereof.

4.  A method according claims 1 or 2, **characterized in that** the optical property is NA (numerical aperture) and that the value for NA (numerical aperture) obtained in step vii) is used to calculate delay time and/or Macrobend induced attenuation.

5.  A method according claims 3 or 4, **characterized in that** the delay time is used to calculate the skew for a group of MMF.

6.  A method according to any of the preceding claims, **characterized in that** step iv) and vi) are carried out by using an optical time domain reflectometer (OTDR) based method.

7.  A method according to claim 6, **characterized in that** said OTDR method comprises determining said backscattering coefficient (Rrel) from bidirectional measurement of the splice or coupling loss between a reference MMF (REF) and a MMF under test (FUT).

8.  A method for determining the NA (numerical aperture) by measuring the relative backscatter coefficient (Rrel) of an optical fiber by using an optical time domain reflectometer (OTDR) based method according to any one or more of claims 1 and 2.

9.  A method for determining the Macrobend induced attenuation by measuring the relative backscatter coefficient (Rrel) of an optical fiber by using an optical time domain reflectometer (OTDR) based method according to any one or more of claims 1 and 2.

10.  A method for determining the time delay by measuring the relative backscatter coefficient (Rrel) of an optical fiber by using an optical time domain reflectometer (OTDR) based method according to any one or more of claims 1 and 2.

11.  A method for determining the skew by measuring the relative backscatter coefficient (Rrel) of a group of optical fibers by using an optical time domain reflectometer (OTDR) based method according to any one or more of claims 1 and 2.

**Fig. 1**

**Fig. 2**

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008203184 B
- JP 3120437 B
- JP 11287741 B

### Non-patent literature cited in the description

- Experimental Investigation of Variation of Backscattered Power Level with Numerical Aperture in Multimode Optical Fibers. *Electronics Letters,* 1982, vol. 18, 130-132
- **P.MATTHIJSSE ; C.M DE BLOK.** Field measurement of splice loss applying the backscattering method. *Electronics Letters,* 1979, vol. 15 (24), 795-6